# EUROPÄISCHE PATENTSCHRIFT

(11) **EP 3 517 409 B1**
(45) Veröffentlichungstag und Bekanntmachung des Hinweises auf die Patenterteilung: **31.01.2024**
(21) Anmeldenummer: 19151793.7
(22) Anmeldetag: 15.01.2019
(51) Int. Cl.: B62D 15/02, G08G 1/14, G01C 21/00, G08G 1/01, G08G 1/0967, G06V 10/82, G06V 20/58, G06V 10/764

(54) **VERFAHREN ZUR DETEKTION VON GARAGENPARKPLÄTZEN**
METHOD FOR DETECTING GARAGE PARKING SPOTS
PROCÉDÉ DE DÉTECTION DE PLACES DE STATIONNEMENT

(30) Priorität: 24.01.2018 DE 102018101513
(43) Veröffentlichungstag der Anmeldung: 31.07.2019
(73) Patentinhaber: Valeo Schalter und Sensoren GmbH, 74321 Bietigheim-Bissingen (DE)
(72) Erfinder: Stamatopoulos, Evangelos, 74321 Bietigheim-Bissingen (DE); Schoenung, Gabriel, 74321 Bietigheim-Bissingen (DE)
(74) Vertreter: Pothmann, Karsten

(56) Entgegenhaltungen:
- WO-A1-2011/154242
- WO-A1-2018/024585
- DE-A1-102013 003 683
- DE-A1-102017 107 626

## Beschreibung

Die vorliegende Erfindung betrifft ein Verfahren zur Detektion von Garagenparkplätzen für Fahrzeuge in einem Umgebungsbereich eines Fahrzeugs. Auch betrifft die Erfindung ein Parkassistenzsystem zum Durchführen eines solchen Verfahrens. Des Weiteren betrifft die vorliegende Erfindung Fahrzeug mit einem Parkassistenzsystem.

Parkassistenzsysteme für Kraftfahrzeuge sind bereits Stand der Technik. Sie dienen zum Unterstützen des Fahrers beim Einparken seines Kraftfahrzeugs in eine Parklücke und gegebenenfalls auch beim Ausparken aus der Parklücke. Bei Parkassistenzsystemen, welche zum semi-autonomen oder vollautomatischen Einparken in eine Garage ausgebildet sind, besteht eine besondere Herausforderung darin, die Garage automatisch durch das Parkassistenzsystem zu detektieren. Das Parkassistenzsystem soll dazu in der Lage sein, die Garage als Zielposition des Fahrzeugs zu detektieren, ohne dass der Fahrer dazu eine spezielle Eingabe vorzunehmen braucht. Das Parkassistenzsystem soll also ein Parkszenario detektieren können, bei welchem der Fahrer sein Kraftfahrzeug vor der Garage oder in der Umgebung der Garage abstellt. Eine wesentliche Aufgabe des Parkassistenzsystems ist das Erkennen einer Parklücke in der Garage selbst. Parkassistenzsysteme erhalten dabei Input aus mehreren Datenquellen, wie z.B. die fahrzeugseitige Bildaufnahme, Bildprozessierung, Radarsensoren, Lidar, Ultraschallsensoren und andere Quellen.

Allen Systemarten ist gemein, dass das Parkassistenzsystem anhand von erfassten Umgebungsinformationen die Parklücke detektieren und die aktuelle Lage des Kraftfahrzeugs relativ zur Parklücke bestimmen kann. Abhängig von der aktuellen Lage des Kraftfahrzeugs berechnet das System dann eine für den Parkvorgang geeignete Einparktrajektorie, entlang welcher das Kraftfahrzeug kollisionsfrei in die Zielposition in der Parklücke vollautomatisch oder semi-autonom geführt wird. Das Erfassen von Umgebungsinformationen geschieht dabei mittels Sensoren, wobei verschiedenste Sensortechnologien miteinander kombiniert werden, um eine digitale Umgebungskarte zu erstellen, die die erforderlichen Informationen über das Garagenlayout enthält. Basierend auf dem Garagenlayout wird von dem Parkassistenzsystem die Parklücke detektiert. Das Garagenlayout kann z.B. aus den Seitenwänden der Garage und der Rückwand bestehen. Diese Information wird als ausreichend für die Aktivierung des Garagenparkmanövers angesehen. Das System kann jedoch nicht sicherstellen, dass das bereitgestellte Garagenlayout sich auch auf einen Garagenparkplatz bezieht. Dies liegt daran, dass eine ähnliche Interpretation im Falle einer Parklücke erhalten werden kann, die zum rechtwinkligen Parken geeignet ist.

Aus der DE 10 2012 022 336 A1 ist ein Verfahren zum Durchführen eines zumindest semi-autonomen Parkvorgangs eines Kraftfahrzeugs in eine Garage bekannt, wobei mittels eines Parkassistenzsystems des Kraftfahrzeugs die Garage detektiert wird und eine aktuelle Lage des Kraftfahrzeugs relativ zur Garage bestimmt wird, und wobei nach Detektion der Garage der zumindest semi-autonome Parkvorgang abhängig von der aktuellen Lage des Kraftfahrzeugs relativ zur Garage durchgeführt wird, wobei mittels einer Kamera des Parkassistenzsystems ein Bild der Garage erfasst wird und das Detektieren der Garage umfasst, dass mittels einer Bildverarbeitungseinrichtung des Parkassistenzsystems das Bild einer Mustererkennung hinsichtlich einer Garageneinfahrt unterzogen wird und mittels der Mustererkennung die Garage identifiziert wird.

Die DE 10 2017 107626 A1 zeigt Verfahren zum Steuern eines Fahrzeugs und Detektieren verfügbarer Parkstellflächen in einer Parkumgebung. Das Verfahren umfasst: Empfangen von Radardaten von einem oder mehreren Radarsystemen; Berechnen von Koordinatendaten aus den Radardaten; Verarbeiten der Koordinatendaten, um Parkstellflächengrenzen in der Parkumgebung zu schätzen; Berechnen von Spline-Schätzungen für die Parkstellflächengrenzen aus den geschätzten Parkstellflächengrenzen; und Bereitstellen der Spline-Schätzungen für ein Fahrzeugcomputersystem. Die DE 10 2017 107626 A1 offenbart den Oberbegriff der Ansprüche 1 und 12.

Gegenwärtig muss häufig die Garagenparkfunktion manuell durch den Fahrer gestartet werden, da ein Garagenparkplatz nicht zweifelsfrei erkannt wurde. In Zukunft soll jedoch ein fortgeschritteneres System in der Lage sein, einen Garagenparkplatz genau zu erkennen und die Garagenparkfunktion entsprechend zu aktivieren.

Ausgehend von dem oben genannten Stand der Technik liegt der Erfindung somit die Aufgabe zugrunde, eine Lösung aufzuzeigen, wie bei einem Verfahren zur Detektion von Garagenparkplätzen eine Garage zuverlässig detektiert werden kann.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur Detektion von Garagenparkplätzen für Fahrzeuge angegeben, in einem Umgebungsbereich eines Fahrzeugs mit einem Parkassistenzsystem, wobei das Fahrzeug wenigstens einen Umgebungssensor aufweist, umfassend die Schritte: Empfang von Sensordaten mit dem Parkassistenzsystem von dem wenigstens einen Umgebungssensor aus dem Umgebungsbereich, Übermittlung der Sensordaten an eine fahrzeugseitige Rechnereinheit, Erstellen einer digitalen Umgebungskarte des Umgebungsbereichs aus den Sensordaten, Erkennen eines parklückenartigen Teilbereichs des Umgebungsbereichs in der Umgebungskarte, Klassifizieren des parklückenartigen Teilbereichs als Garagenparkplatz mittels Deep-Learning Modellen.

Grundidee der vorliegenden Erfindung ist es also, die Klassifizierung von Garagenparkplätzen anhand von Sensordaten mittels Deep-Learning Modellen durchführen zu lassen. Beim Deep-Learning erlernt ein Computermodell die Durchführung von Klassifikationsaufgaben direkt aus den zur Verfügung gestellten Sensordaten. Deep Learning erreicht höhere Niveaus der genauen Erkennung als je zuvor, wodurch die Genauigkeit der Erkennung des parklückenartigen Teilbereichs als Garagenparkplatz gesteigert wird.

In einer vorteilhaften Ausgestaltung der Erfindung wird ein Model für den Garagenparkplatz verwendet und fehlende Parameter des Modells mittels der Sensordaten durch das Deep-Learning Modell ergänzt werden, wodurch eine Klassifizierung des parklückenartigen Teilbereichs als Garagenparkplatz ermöglicht wird.

In einer weiter vorteilhaften Ausgestaltung der Erfindung wird das Deep-Learning Modell für die Klassifizierung von Garagenparkplätzen vortrainiert, wobei das Vortrainieren des Deep-Learning Modells durch Zugriff auf Daten einer Datenbank oder durch fahrzeugseitige Aufnahme von Sensordaten erfolgt.

In einer vorteilhaften Ausgestaltung der Erfindung erfolgt das Vortrainieren des Deep-Learning Modells online oder offline. Im Online-Modus ("online") kann das Deep-Learning Modell auf Daten einer Datenbank zugreifen, welche bereits mit Sensordaten, gefüllt ist, die von anderen Fahrzeugen, z.B. von Entwicklungs-Fahrzeugen, an eine Cloud über ein mobiles Netzwerk gesendet wurden. Der eigentliche Lernprozess des Deep-Learning Modells kann nach Input dieser Sensordaten auch im Offline-Modus erfolgen ("offline"). Die Sensordaten, dieser Datenbank sind bevorzugt manuell markiert bzw. annotiert. Das Vortrainieren des Deep-Learning Modells kann auch durch fahrzeugseitige Aufnahme von Sensordaten, erfolgen, welche bevorzugt im Offline-Modus zum Lernen bzw. Vortrainieren des Deep-Learning Modells verwendet werden können.

In einer weiter vorteilhaften Ausgestaltung der Erfindung umfasst das Deep-Learning Modell ein neuronales Netzwerk, insbesondere ein Deep Neuronal Network (DNN). Vorteilhaft ist, wenn das Deep-Learning Modell Architekturen in Form von neuronalen Netzen nutzt. Nutzt ein solches Deep-Learning Modelle ein neuronales Netzwerk wird es auch als Deep Neuronal Network (DNN) bezeichnet. Weiter vorteilhaft ist, dass es sich bei dem Deep Neuronal Network (DNN) um ein Convolutional Neuronal Network (CNN) handelt. Ein CNN faltet erlernte Merkmale mit Eingabedaten, wobei 2D-Faltungsebenen verwendet werden, die diese Architektur zur Verarbeitung von 2D-Daten wie Bildern geeignet macht. CNNs machen eine manuelle Merkmalsextraktion unnötig. Sie müssen also nicht Merkmale identifizieren, die zur Klassifikation von Bildern verwendet werden. Das CNN arbeitet, indem es Merkmale direkt aus Bildern extrahiert. Die relevanten Merkmale werden nicht vortrainiert, sondern sie werden gelernt, während das Netz anhand einer Menge von Bildern trainiert wird. Dank dieser automatisierten Merkmalsextraktion sind Deep-Learning-Modelle für Aufgaben der Computer Vision, wie zum Beispiel die Objektklassifikation, hervorragend geeignet.

In einer vorteilhaften Ausgestaltung der Erfindung umfasst der Schritt des Empfangens von Sensordaten mit dem wenigstens einen Umgebungssensor ein Empfangen von Umgebungssensordaten wenigstens eines fahrzeugseitigen Umgebungssensors, insbesondere ein Empfangen von Ultraschallsensordaten und/oder Radarsensordaten und/oder Lidardaten, mit dem Parkassistenzsystem.

Erfindungsgemäß umfasst der Schritt des Empfangens von Sensordaten mit dem wenigstens einen Umgebungssensor ein Empfangen von Bilddaten von einem oder mehreren Bildern und/oder Videosequenzen mit zumindest einem Kamerasystem umfassend eine oder mehrere Kameras mit dem Parkassistenzsystem.

Erfindungsgemäß umfasst das Erstellen einer digitalen Umgebungskarte des Umgebungsbereichs aus den Sensordaten ein Erstellen einer dreidimensionalen Umgebungskarte. Zusätzlich zum Erkennen eines parklückenartigen Teilbereichs kann das Erkennen eine Decke aus einer dreidimensionalen Umgebungskarte das Vorhandensein einer Garage bestätigen.

In einer weiter vorteilhaften Ausgestaltung der Erfindung umfasst das Klassifizieren des parklückenartigen Teilbereichs als Garagenparkplatz ein Verwenden eines Positionssignals. Die Kombination der Sensordaten des Umgebungssensors und der digitalen Umgebungskarte des Umgebungsbereichs mit Positionsdaten hat den Vorteil, dass sichergestellt werden kann, dass der erkannte parklückenartige Teilbereich zu einer Garage gehört und sich nicht auf einen anderen Typ von Parklücken bezieht.

Das Positionssignal kann beispielsweise durch die bekannten

Satellitennavigationssysteme wie z.B. GPS, Galileo, GLONASS oder Beidou bereitgestellt werden.

In einer vorteilhaften Ausgestaltung der Erfindung wird für die Klassifizierung des parklückenartigen Teilbereichs als Garagenparkplatz eine Vehicle-To-Infrastructure Kommunikation verwendet, wobei das Fahrzeug direkt mit der Garage kommuniziert. Durch die direkte Kommunikation des Parkassistenzsystems mit der Infrastruktur der Garage wird ermöglicht, dass das Parkassistenzsystem erkennt, dass sich das Fahrzeug in einem Bereich vor der Garage befindet. Durch die Kombination dieser Informationen, mit der durch die digitale Umgebungskarte erzeugten Informationen, wird die Detektion von Garagenparkplätzen weiter verbessert.

In einer weiter vorteilhaften Ausgestaltung der Erfindung ist vorgesehen, dass ein zusätzlicher Schritt das automatische Aktivieren des Parkassistenzsystems umfasst sobald der parklückenartige Teilbereich als Garagenparkplatz klassifiziert wurde.

In einer vorteilhaften Ausgestaltung der Erfindung umfasst das Verfahren einen zusätzlichen Schritt zum automatischen Aktivieren eines Parkassistenzsystems sobald der parklückenartige Teilbereich als Garagenparkplatz klassifiziert wurde. Ein manuelles Einschalten z.B. durch den Fahrer ist dadurch nicht mehr notwendig.

In einer weiter vorteilhaften Ausgestaltung der Erfindung erfolgt das Einparken in die Garage autonom durch das Parkassistenzsystem.

In einer weiter vorteilhaften Ausgestaltung der Erfindung wird eine Größe des zum Parken zur Verfügung stehenden Freiraums in der Garage ermittelt.

Neben dem erkennen eines parklückenartigen Teilbereichs als Garagenparkplatz können weitere Informationen über den Garagenparkplatz gesammelt werden. Beispielsweise kann durch die Ermittlung des zur Verfügung stehenden Freiraums ermittelt werden, ob das Fahrzeug auch in die Garage reinpasst.

Die Erfindung stellt weiterhin ein Parkassistenzsystem, für ein Fahrzeug zum Unterstützen eines Fahrers eines Kraftfahrzeugs beim Einparken in eine Parklücke, insbesondere in eine Garage zur Verfügung, umfassend wenigstens einen Umgebungssensor eingerichtet zum Empfangen von Sensordaten aus dem Umgebungsbereich des Fahrzeugs, und eine fahrzeugseitige Rechnereinheit, die eingerichtet ist, die Sensordaten zu empfangen und eine digitale Umgebungskarte des Umgebungsbereichs basierend auf/unter Verwendung von den Sensordaten zu erstellen, wobei die Rechnereinheit weiter eingerichtet ist, einen parklückenartigen Teilbereich des Umgebungsbereichs in der Umgebungskarte zu erkennen und den parklückenartigen Teilbereich als Garagenparkplatz mittels Deep-Learning Modellen zu klassifizieren, wobei der Umgebungssensor eingerichtet ist zum Empfangen von Bilddaten von einem oder mehreren Bildern und/oder Videosequenzen mit zumindest einem Kamerasystem umfassend eine oder mehrere Kameras und dass die Rechnereinheit eingerichtet ist, als digitale Umgebungskarte des Umgebungsbereichs aus den Sensordaten eine dreidimensionale Umgebungskarte zu erstellen.

Die Erfindung stellt weiterhin ein Computerprogrammprodukt zur Durchführung des erfindungsgemäßen Verfahrens zur Verfügung.

Die Erfindung betrifft außerdem ein Fahrzeug mit dem erfindungsgemäßen Parkassistenzsystem. Das Fahrzeug kann insbesondere ein Personenkraftwagen sein.

Nachfolgend wird die Erfindung unter Bezugnahme auf die anliegende Zeichnung anhand bevorzugter Ausführungsformen näher erläutert.

Es zeigen
- Fig. 1: eine schematische Ansicht eines Kraftfahrzeugs mit einem Parkassistenzsystem gemäß einer bevorzugten Ausführungsform der Erfindung;
- Fig. 2: eine schematische Ansicht eines Gebäudes mit einer Garage;
- Fig. 3: in schematischer Darstellung eine Draufsicht auf ein Parkszenario; und
- Fig. 4: ein vereinfachtes schematisches Ablaufdiagramm einer Ausführung eines erfindungsgemäßen Verfahrens.

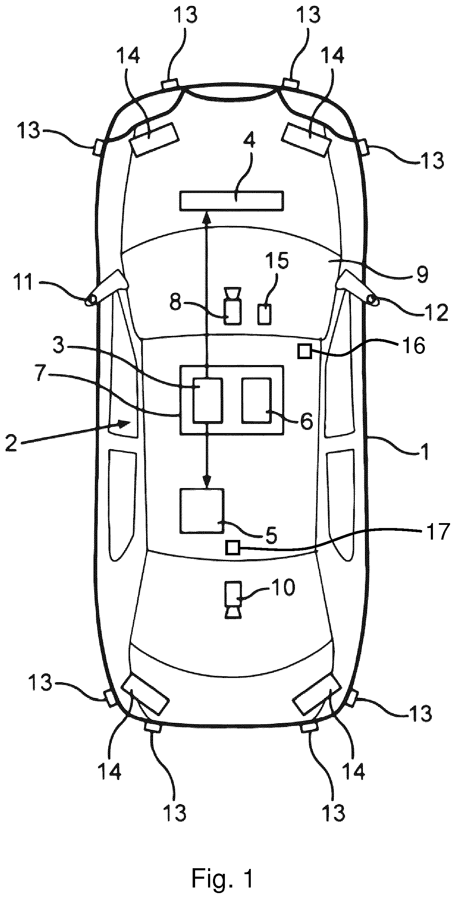

Fig. 1 zeigt eine schematische Ansicht eines Kraftfahrzeugs 1, beispielsweise einen Personenkraftwagen. Das Kraftfahrzeug 1 umfasst ein Parkassistenzsystem 2, welches ein semi-autonomes oder vollautomatisches Parkassistenzsystem 2 ist. Zum Parkassistenzsystem 2 gehört eine Steuereinrichtung 3 bzw. ein Steuergerät. Die Steuereinrichtung 3 steuert eine Lenkvorrichtung 4 und optional auch eine Antriebs- und Bremseinrichtung 5 des Kraftfahrzeugs 1 an. Die Steuereinrichtung 3 kann die Lenkvorrichtung 4 und optional auch die Antriebs- und Bremseinrichtung 5 automatisch betätigen, um eine Querführung und gegebenenfalls eine Längsführung des Kraftfahrzeugs 1 selbsttätig zu steuern. Das Parkassistenzsystem 2 ist zum Durchführen eines zumindest semi-autonomen Parkvorgangs des Kraftfahrzeugs 1 in eine Garage 20 ausgebildet.

Zum Parkassistenzsystem 2 gehört außerdem eine fahrzeugseitige Rechnereinheit 6, welche zum Verarbeiten und Auswerten von Sensordaten eingerichtet ist. Des Weiteren ist die Rechnereinheit 6 ausgelegt aus den übermittelten Sensordaten eine digitale Umgebungskarte des Umgebungsbereichs des Fahrzeugs 1 zu erstellen. Die Steuereinrichtung 3 und die Rechnereinheit 6 können gegebenenfalls in einer gemeinsamen Einheit 7 integriert sein. Das Parkassistenzsystem 2 umfasst zumindest einen Umgebungssensor 8, 10, 11, 12, 13, 14, 15, welcher zum Empfangen von Sensordaten aus dem Umgebungsbereich des Fahrzeugs 1 ausgelegt ist. Zu den Umgebungssensoren 8, 10, 11, 12, 13, 14, 15 können beispielsweise Abstandssensoren, wie Ultraschallsensoren 13, die sowohl am vorderen als auch am hinteren Stoßfänger des Kraftfahrzeugs 1 verteilt angeordnet sind; Radarsensoren 14, welche beispielsweise in den jeweiligen Eckbereichen des Fahrzeugs 1 angeordnet sind; sowie ein LIDAR-Sensoren 15, die beispielsweise hinter der Windschutzscheibe 9 angeordnet sind, gehören. Die genannten Umgebungssensoren 8, 10, 11, 12, 13, 14, 15 sind mit der Rechnereinheit 6, gekoppelt, so dass die Rechnereinheit 6 die Sensordaten dieser Umgebungssensoren verarbeiten kann. Weiter können die Umgebungssensoren 8, 10, 11, 12, 13, 14, 15 auch Kameras 8, 10, 11, 12 umfassen. Im Ausführungsbeispiel ist eine Kamera 8 hinter der Windschutzscheibe 9 des Kraftfahrzeugs 1 platziert und erfasst einen Umgebungsbereich vor dem Kraftfahrzeug 1. Eine zweite Kamera 10 ist im Heckbereich des Kraftfahrzeugs 1 angeordnet, etwa hinter der Heckscheibe oder aber an der Heckklappe, und erfasst den Umgebungsbereich hinter dem Kraftfahrzeug 1. Es können optional auch Kameras 11, 12 in die jeweiligen Außenspiegel des Kraftfahrzeugs 1 integriert sein. Alle Kameras 8, 10, 11, 12 stellen Bilder des jeweiligen Umgebungsbereiches bereit und übermitteln die aufgenommene Bilder an die Rechnereinheit 6.

Mittels der an die Rechnereinheit 6 übermittelten Sensordaten wird eine digitale Umgebungskarte des Umgebungsbereichs erstellt. Aus der digitalen Umgebungskarte wird mittels der Rechnereinheit 6 ein parklückenartiger Teilbereich 21 des Umgebungsbereichs erkannt. Anschließend wird der parklückenartige Teilbereich 21 als Garagenparkplatz mittels Deep-Learning Modellen klassifiziert. Die Deep-Learning Modelle können dabei als Deep Neuronal Networks (DNN) in die Rechnereinheit integriert sein.

Zusätzlich zur Verbesserung der Detektion eines Garagenparkplatzes einer Garage ist ein Empfänger von Positionssignalen 17 vorgesehen. Die Kombination der Sensordaten des Umgebungssensors und der digitalen Umgebungskarte des Umgebungsbereichs mit Positionsdaten hat den Vorteil, dass sichergestellt werde kann, dass der erkannte parklückenartige Teilbereich zu einer Garage 20 gehört und sich nicht auf einen anderen Typ von Parklücken bezieht. Der Empfänger von Positionssignalen 17 kann beispielsweise Signale der bekannten Satellitennavigationssysteme wie z.B. GPS, Galileo, GLONASS oder Beidou empfangen.

Eine weitere Verbesserung der Detektion eines Garagenparkplatzes in einer Garage erfolgt mittels einer Vehicle-to-Infrastructure Kommunikation. Hierdurch kann das Fahrzeug 1, insbesondere das Parkassistenzsystem 2, direkt mit der Garage 20 über eine entsprechende Datenverbindung kommunizieren und die Garage 20 als solche identifizieren.

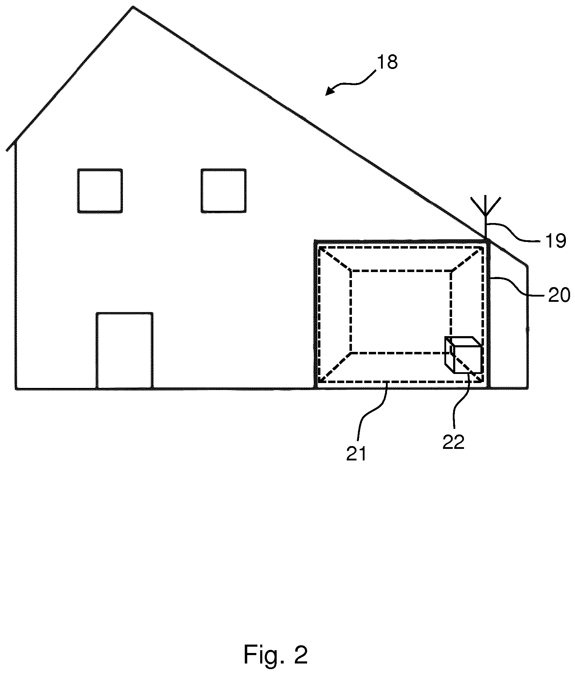

In Fig. 2 ist ein Gebäude 18 mit einer Garage 20 bzw. ihre Garageneinfahrt gezeigt. Die Garage 20 wird durch drei Kanten unmittelbar begrenzt, nämlich durch zwei vertikale Kanten sowie durch eine horizontale Kante. Während die vertikalen Kanten die Garageneinfahrt seitlich nach links bzw. nach rechts begrenzen, ist die Garageneinfahrt durch die horizontale Kante nach oben hin begrenzt. Die von den Sensoren 8, 10, 11, 12, 13, 14, 15 empfangenen Sensordaten werden in der Rechnereinheit 6 in eine digitale Umgebungskarte 21 umgewandelt, die das Layout der Garage 20, in Fig. 2 durch die gestrichelten Linien dargestellt, enthält. Der parklückenartige Teilbereich der Garage 20 wird erkannt, jedoch kann das System nicht sicherstellen, dass das bereitgestellte Garagenlayout und der darin erkannte parklückenartige Teilbereich sich auch auf einen Garagenparkplatz bezieht. Dies liegt daran, dass eine ähnliche Interpretation im Falle einer Parklücke erhalten werden kann, die zum rechtwinkligen Parken geeignet ist. Daher wird der parklückenartige Teilbereich weiter mittels Deep-Learning Modellen klassifiziert. Weiter ist eine Vehicle-to-Infrastructure-Antenne 19 gezeigt, die eine Datenverbindung zwischen dem Fahrzeug 1 und der Garage 20 mittels einer Vehicle-to-Infrastructure Kommunikation zur Verfügung stellen kann.

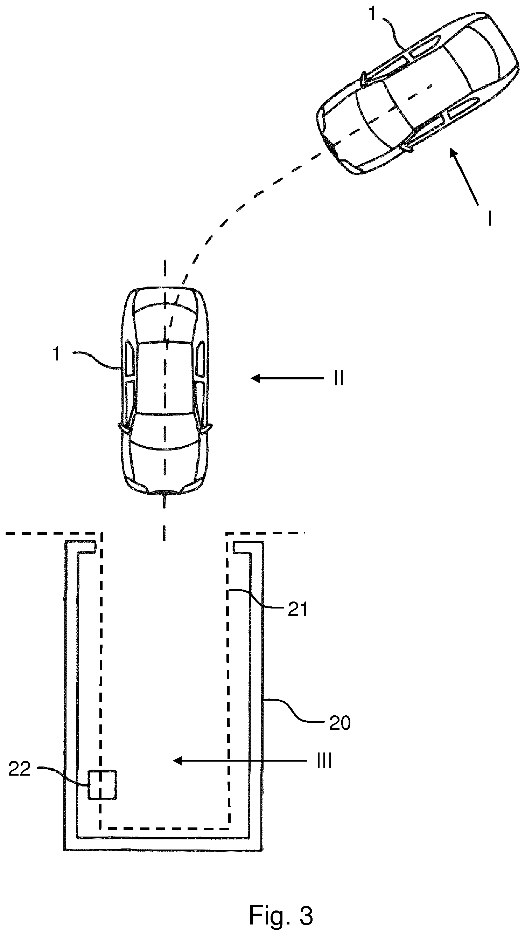

In Fig. 3 ist nun ein Parkszenario dargestellt, bei welchem sich das Kraftfahrzeug 1 in einer Ausgangsposition I befindet. In der Ausgangsposition I empfängt das Parkassistenzsystem 2 Sensordaten mittels zumindest einen Umgebungssensor 8, 10, 11, 12, 13, 14, 15 aus dem Umgebungsbereich und übermittelt die Sensordaten an die fahrzeugseitige Rechnereinheit 6. Die Rechnereinheit 6 erstellt aus den Sensordaten eine digitale Umgebungskarte des Umgebungsbereichs. Da der parklückenartige Teilbereich 21 aus der digitalen Umgebungskarte und somit das Layout der Garage 20 auch einem Layout einer Parklücke, die zum rechtwinkligen Parken geeignet ist, entsprechen kann, wird der parklückenartige Teilbereich mittels Deep-Learning Modellen als Garage 20 klassifiziert. Dadurch wird sichergestellt, dass es sich um eine Garage 20 und nicht um eine Parklücke handelt. Bei einem bereits als Garage 20 klassifizierten parklückenartige Teilbereichs 21 berechnet die Rechnereinheit 6 eine Einparktrajektorie von der aktuellen Ausgangsposition I zu einer Zwischenposition II zwischen der Ausgangsposition I und einer Zielposition III in der Garage 20. Das Kraftfahrzeug 1 wird dann semi-autonom oder vollautomatisch in die Zwischenposition II entlang der ermittelten Einparktrajektorie geführt. Hierbei betätigt die Steuereinrichtung 3 zumindest die Lenkvorrichtung 4 und optional auch die Antriebs- und Bremseinrichtung 5. Etwaige Hindernisse 22 werden dabei ebenfalls von den Umgebungssensoren 8, 10, 11, 12, 13, 14, 15 erfasst und mittels der Deep-Learning Modellen klassifiziert. Hierdurch wird die Sicherheit beim Einparkvorgang sichergestellt.

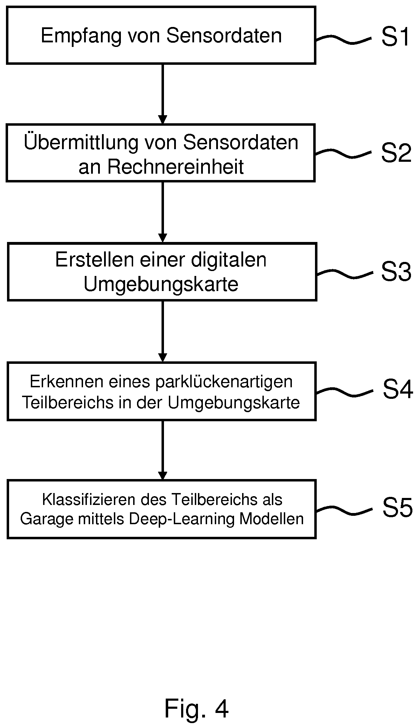

In Fig. 4 ist ein vereinfachtes schematisches Ablaufdiagramm einer Ausführung eines erfindungsgemäßen Verfahrens gezeigt. Im Schritt S1 werden Sensordaten mit dem Parkassistenzsystem 2 von dem wenigstens einen Umgebungssensor 8, 10, 11, 12, 13, 14, 15 aus dem Umgebungsbereich des Kraftfahrzeugs 1 empfangen und im Schritt S2 an eine fahrzeugseitige Rechnereinheit 6 übermittelt.

Die Rechnereinheit 6 erstellt im Schritt S3 eine digitale Umgebungskarte des Umgebungsbereichs aus den Sensordaten. Im Schritt S4 wird ein parklückenartiger Teilbereich 21 des Umgebungsbereichs in der Umgebungskarte erkannt. Im Schritt S5 wird der parklückenartigen Teilbereich 21 als Garagenparkplatz einer Garage 20 mittels Deep-Learning Modellen klassifiziert. Die Deep-Learning Modelle können dabei neuronale Netzwerke, insbesondere Deep Neuronal Networks (DNN) umfassen.

Da die Umgebungssensoren 8, 10, 11, 12, 13, 14, 15 eine große Menge von Daten liefern, wird im Schritt S5 ein Model für den Garagenparkplatz verwendet und fehlende Parameter des Modells mittels der Sensordaten durch das Deep-Learning Modell ergänzt. Dazu wird das Deep-Learning Modell für die Klassifizierung von Garagenparkplätzen vortrainiert, wobei das Vortrainieren des Deep-Learning Modells durch Zugriff auf Daten einer Datenbank oder durch fahrzeugseitige Aufnahme von Sensordaten erfolgt. Das Vortrainieren des Deep-Learning Modells kann online oder offline erfolgen. Im Online-Modus ("online") kann das Deep-Learning Modell auf Daten einer Datenbank, insbesondere Cloud, zugreifen, welche bereits mit Sensordaten, gefüllt ist, die von anderen Fahrzeugen, z.B. von Entwicklungs-Fahrzeugen, an die Datenbank, etwa eine Cloud, über ein mobiles Netzwerk gesendet wurden. Der eigentliche Lernprozess des Deep-Learning Modells kann nach Input dieser Sensordaten auch im Offline-Modus erfolgen ("offline"). Die Sensordaten dieser Datenbank sind bevorzugt manuell markiert bzw. annotiert. Das Vortrainieren des Deep-Learning Modells kann auch durch fahrzeugseitige Aufnahme von Sensordaten, erfolgen, welche bevorzugt im Offline-Modus zum Lernen bzw. Vortrainieren verwendet werden.

### Bezugszeichenliste

- 1: Fahrzeug
- 2: Parkassistenzsystem
- 3: Steuereinrichtung
- 4: Lenkvorrichtung
- 5: Antriebs- und Bremseinrichtung
- 6: Rechnereinheit
- 7: Einheit
- 8: Kamera
- 9: Windschutzscheibe
- 10: Kamera
- 11: Kamera
- 12: Kamera
- 13: Sensor
- 14: Sensor
- 15: Sensor
- 16: Vehicle-to-Infrastructure-Antenne
- 17: Positionssignalempfänger
- 18: Gebäude
- 19: Antenne
- 20: Garage
- 21: Parklückenartiger Teilbereich
- 22: Hindernis

## Patentansprüche

1. Verfahren zur Detektion von Garagenparkplätzen für Fahrzeuge (1) in einem Umgebungsbereich eines Fahrzeugs (1) mit einem Parkassistenzsystem (2), wobei das Fahrzeug (1) wenigstens einen Umgebungssensor (8, 10, 11, 12, 13, 14, 15) aufweist, umfassend die Schritte
Empfang von Sensordaten mit dem Parkassistenzsystem (2) von dem wenigstens einen Umgebungssensor (8, 10, 11, 12, 13, 14, 15) aus dem Umgebungsbereich,
Übermittlung der Sensordaten an eine fahrzeugseitige Rechnereinheit (6), Erstellen einer digitalen Umgebungskarte des Umgebungsbereichs aus den Sensordaten,
Erkennen eines parklückenartigen Teilbereichs (21) des Umgebungsbereichs in der Umgebungskarte,
Klassifizieren des parklückenartigen Teilbereichs (21) als Garagenparkplatz mittels Deep-Learning Modellen, **dadurch gekennzeichnet, dass** der Schritt des Empfangens von Sensordaten mit dem wenigstens einen Umgebungssensor (8, 10, 11, 12, 13, 14, 15) ein Empfangen von Bilddaten von einem oder mehreren Bildern und/oder Videosequenzen mit zumindest einem Kamerasystem umfassend eine oder mehrere Kameras (8, 10, 11, 12) mit dem Parkassistenzsystem (2) umfasst, und dass das Erstellen einer digitalen Umgebungskarte des Umgebungsbereichs aus den Sensordaten ein Erstellen einer dreidimensionalen Umgebungskarte umfasst.

2. Verfahren nach Anspruch 1, **dadurch gekennzeichnet, dass** ein Model für den Garagenparkplatz verwendet wird und fehlende Parameter des Modells mittels der Sensordaten durch das Deep-Learning Modell ergänzt werden, wodurch eine Klassifizierung des parklückenartigen Teilbereichs (21) als Garagenparkplatz ermöglicht wird.

3. Verfahren nach einem der vorhergehenden Ansprüche, **dadurch gekennzeichnet, dass** das Deep-Learning Modell für die Klassifizierung von Garagenparkplätzen vortrainiert wird, wobei das Vortrainieren des Deep-Learning Modells durch Zugriff auf Daten einer Datenbank oder durch fahrzeugseitige Aufnahme von Sensordaten erfolgt.

4. Verfahren nach Anspruch 3, **dadurch gekennzeichnet, dass** das Vortrainieren des Deep-Learning Modells online oder offline erfolgt.

5. Verfahren nach einem der vorherigen Ansprüche, **dadurch gekennzeichnet, dass** das Deep-Learning Modell ein neuronales Netzwerk, insbesondere ein Deep Neuronal Network (DNN) umfasst.

6. Verfahren nach einem der vorherigen Ansprüche, **dadurch gekennzeichnet, dass** das Klassifizieren des parklückenartigen Teilbereichs (21) als Garagenparkplatz ein Verwenden eines Positionssignals umfasst.

7. Verfahren nach einem der vorherigen Ansprüche, **dadurch gekennzeichnet, dass** für die Klassifizierung des parklückenartigen Teilbereichs (21) als Garagenparkplatz eine Vehicle-To-Infrastructure Kommunikation verwendet wird, wobei das Fahrzeug direkt mit der Garage kommuniziert.

8. Verfahren nach einem der vorherigen Ansprüche, **dadurch gekennzeichnet, dass** das Verfahren eine zusätzlichen Schritt zum automatischen Aktivieren des Parkassistenzsystems (2) vorsieht, sobald der parklückenartige Teilbereich (21) als Garagenparkplatz klassifiziert wurde.

9. Verfahren nach einem der vorherigen Ansprüche, **dadurch gekennzeichnet, dass** das Einparken in die Garage (20) autonom durch das Parkassistenzsystem (2) erfolgt.

10. Verfahren nach einem der vorherigen Ansprüche, **dadurch gekennzeichnet, dass** eine Größe des zum Parken zur Verfügung stehenden Freiraums in der Garage (20) ermittelt wird.

11. Parkassistenzsystem (2), für ein Fahrzeug (1) zum Unterstützen eines Fahrers eines Kraftfahrzeugs beim Einparken in eine Parklücke, insbesondere in eine Garage (20), umfassend
wenigstens einen Umgebungssensor (8, 10, 11, 12, 13, 14, 15) eingerichtet zum Empfangen von Sensordaten aus dem Umgebungsbereich des Fahrzeugs (1), und
eine fahrzeugseitige Rechnereinheit (6), die eingerichtet ist, die Sensordaten zu empfangen und eine digitale Umgebungskarte des Umgebungsbereichs basierend auf/unter Verwendung von den Sensordaten zu erstellen, wobei
die Rechnereinheit (6) weiter eingerichtet ist, einen parklückenartigen Teilbereich (1) des Umgebungsbereichs in der Umgebungskarte zu erkennen und den parklückenartigen Teilbereich (21) als Garagenparkplatz mittels Deep-Learning Modellen zu klassifizieren, **dadurch gekennzeichnet, dass** der Umgebungssensor (8, 10, 11, 12, 13, 14, 15) eingerichtet ist zum Empfangen von Bilddaten von einem oder mehreren Bildern und/oder Videosequenzen mit zumindest einem Kamerasystem umfassend eine oder mehrere Kameras (8, 10, 11, 12) und dass die Rechnereinheit (6) eingerichtet ist, als digitale Umgebungskarte des Umgebungsbereichs aus den Sensordaten eine dreidimensionale Umgebungskarte zu erstellen.

12. Fahrzeug (1) mit einem Parkassistenzsystem (2) nach Anspruch 11.

## Claims

1. Method for detecting garage parking spaces for vehicles (1) in an area surrounding a vehicle (1) using a parking assistance system (2), the vehicle (1) having at least one environment sensor (8, 10, 11, 12, 13, 14, 15), comprising the steps of
receiving sensor data from the surrounding area from the at least one environment sensor (8, 10, 11, 12, 13, 14, 15) using the parking assistance system (2),
transmitting the sensor data to an on-vehicle computer unit (6),
creating a digital map of the surrounding area from the sensor data,
detecting a parking-space-like subregion (21) of the surrounding area in the map of the surroundings,
classifying the parking-space-like subregion (21) as a garage parking space by means of deep learning models, **characterized in that** the step of receiving sensor data using the at least one environment sensor (8, 10, 11, 12, 13, 14, 15) comprises receiving image data from one or more images and/or video sequences using at least one camera system, comprising one or more cameras (8, 10, 11, 12), using the parking assistance system (2), and **in that** the creation of a digital map of the surrounding area from the sensor data comprises creating a three-dimensional map of the surroundings.

2. Method according to Claim 1, **characterized in that** a model of the garage parking space is used and missing parameters in the model are added by means of the sensor data using the deep learning model, thus allowing the parking-space-like subregion (21) to be classified as a garage parking space.

3. Method according to either one of the preceding claims, **characterized in that** the deep learning model is pre-trained for classifying garage parking spaces, the pre-training of the deep learning model being carried out by accessing data in a database or by recording sensor data on the vehicle.

4. Method according to Claim 3, **characterized in that** the pre-training of the deep learning model is carried out online or offline.

5. Method according to any one of the preceding claims, **characterized in that** the deep learning model comprises a neural network, in particular a deep neural network (DNN).

6. Method according to any one of the preceding claims, **characterized in that** the classification of the parking-space-like subregion (21) as a garage parking space comprises using a position signal.

7. Method according to any one of the preceding claims, **characterized in that** a vehicle-to-infrastructure communication is used for classifying the parking-space-like subregion (21) as a garage parking space, wherein the vehicle communicates directly with the garage.

8. Method according to any one of the preceding claims, **characterized in that** the method provides an additional step for automatically activating the parking assistance system (2) as soon as the parking-space-like subregion (21) has been classified as a garage parking space.

9. Method according to any one of the preceding claims, **characterized in that** parking in the garage (20) is carried out autonomously by the parking assistance system (2).

10. Method according to any one of the preceding claims, **characterized in that** a size of the available free space for parking in the garage (20) is determined.

11. Parking assistance system (2) for a vehicle (1) to assist a driver of a motor vehicle when parking in a parking space, in particular in a garage (20), comprising
at least one environment sensor (8, 10, 11, 12, 13, 14, 15), which is configured to receive sensor data from the area surrounding the vehicle (1), and
an on-vehicle computer unit (6), which is configured to receive the sensor data and to create a digital map of the surrounding area based on/using the sensor data, wherein
the computer unit (6) is also configured to detect a parking-space-like subregion (1) of the surrounding area in the map of the surroundings and to classify the parking-space-like subregion (21) as a garage parking space by means of deep learning models, **characterized in that** the environment sensor (8, 10, 11, 12, 13, 14, 15) is configured to receive image data from one or more images and/or video sequences using at least one camera system comprising one or more cameras (8, 10, 11, 12) and **in that** the computer unit (6) is configured to create a three-dimensional map of the surroundings from the sensor data as a digital map of the surrounding area.

12. Vehicle (1) having a parking assistance system (2) according to Claim 11.

## Revendications

1. Procédé de détection de places de stationnement de garage, destinées à des véhicules (1), dans une zone d'environnement d'un véhicule (1) à l'aide d'un système d'aide au stationnement (2), le véhicule (1) comportant au moins un capteur d'environnement (8, 10, 11, 12, 13, 14, 15), ledit procédé comprenant les étapes suivantes recevoir, à l'aide du système d'aide au stationnement (2), des données de capteur en provenance de l'au moins un capteur d'environnement (8, 10, 11, 12, 13, 14, 15) de la zone environnante,
transmettre des données de capteur à une unité informatique côté véhicule (6),
créer une carte d'environnement numérique de la zone d'environnement à partir des données de capteur, détecter une sous-zone (21), de type espace de stationnement, de la zone d'environnement de la carte d'environnement,
classer la sous-zone (21), de type espace de stationnement, comme place de stationnement de garage à l'aide de modèles d'apprentissage profond, **caractérisé en ce que** l'étape de réception de données de capteurs à l'aide de l'au moins un capteur d'environnement (8, 10, 11, 12, 13, 14, 15) comprend la réception de données d'images d'une ou plusieurs images et/ou séquences vidéo à l'aide d'au moins un système de caméra comprenant une ou plusieurs caméras (8, 10, 11, 12) à l'aide du système d'aide au stationnement (2), et **en ce que** la création d'une carte d'environnement numérique de la zone d'environnement à partir des données de capteurs comprend la création d'une carte d'environnement tridimensionnelle.

2. Procédé selon la revendication 1, **caractérisé en ce qu'**un modèle est utilisé pour l'espace de stationnement de garage et des paramètres manquants du modèle sont complétés par le modèle d'apprentissage profond à l'aide des données de capteurs, ce qui permet de classer la sous-zone (21) de type espace de stationnement comme place de stationnement de garage.

3. Procédé selon l'une des revendications précédentes, **caractérisé en ce que** le modèle d'apprentissage profond est préalablement entraîné pour le classement de places de stationnement de garage, l'entraînement préalable du modèle d'apprentissage profond étant effectué par accès à des données d'une base de données ou par acquisition de données de capteurs côté véhicule.

4. Procédé selon la revendication 3, **caractérisé en ce que** l'entraînement préalable du modèle d'apprentissage profond est effectué en ligne ou hors ligne.

5. Procédé selon l'une des revendications précédentes, **caractérisé en ce que** le modèle d'apprentissage profond comprend un réseau neuronal, notamment un réseau neuronal profond (DNN).

6. Procédé selon l'une des revendications précédentes, **caractérisé en ce que** le classement de la sous-zone (21) de type espace de stationnement comme place de stationnement de garage comprend l'utilisation d'un signal de position.

7. Procédé selon l'une des revendications précédentes, **caractérisé en ce que** la communication véhicule-à-infrastructure est utilisée pour classer la sous-zone (21) de type espace de stationnement comme place de stationnement de garage, le véhicule communiquant directement avec le garage.

8. Procédé selon l'une des revendications précédentes, **caractérisé en ce que** le procédé prévoit une étape supplémentaire d'activation automatique du système d'aide au stationnement (2) dès que la sous-zone (21) de type espace de stationnement a été classée comme place de stationnement de garage.

9. Procédé selon l'une des revendications précédentes, **caractérisé en ce que** le stationnement dans le garage (20) est effectué de manière autonome par le système d'aide au stationnement (2).

10. Procédé selon l'une des revendications précédentes, **caractérisé en ce qu'**une taille de l'espace libre dans le garage (20), disponible pour le stationnement, est déterminée.

11. Système d'aide au stationnement (2) destiné à un véhicule (1), ledit système étant prévu pour assister un conducteur de véhicule automobile lors du stationnement dans un espace de stationnement, notamment dans un garage (20), comprenant
au moins un capteur d'environnement (8, 10, 11, 12, 13, 14, 15) conçu pour recevoir des données de capteurs en provenance de la zone d'environnement du véhicule (1), et
une unité de calcul côté véhicule (6) qui est conçue pour recevoir les données de capteurs et pour créer une carte d'environnement numérique de la zone d'environnant sur la base/à l'aide des données de capteurs,
l'unité de calcul (6) étant en outre conçue pour détecter une sous-zone (1), de type espace de stationnement, de la zone d'environnement de la carte d'environnement et classer la sous-zone (21), de type espace de stationnement, comme espace de stationnement de garage à l'aide de modèles d'apprentissage profond, **caractérisé en ce que** le capteur d'environnement (8, 10, 11, 12, 13, 14, 15) est conçu pour recevoir des données d'image en provenance d'une ou plusieurs images et/ou séquences vidéo à l'aide d'au moins un système de caméra comprenant une ou plusieurs caméras (8, 10, 11, 12) et **en ce que** l'unité de calcul (6) est conçue pour créer une carte d'environnement tridimensionnelle à partir des données de capteurs sous la forme d'une carte d'environnement numérique de la zone d'environnement.

12. Véhicule (1) comprenant un système d'aide au stationnement (2) selon la revendication 11.
